# EUROPÄISCHE PATENTSCHRIFT

(11) **EP 2 366 924 B1**
(45) Veröffentlichungstag und Bekanntmachung des Hinweises auf die Patenterteilung: **20.07.2016**
(21) Anmeldenummer: 11002193.8
(22) Anmeldetag: 16.03.2011
(51) Int. Cl.: F16K 11/02, F16K 7/14, F16K 11/20, F16K 27/02

(54) **Ventilknoten**
Valve manifold
Ensemble de soupape

(30) Priorität: 16.03.2010 DE 202010003666 U
(43) Veröffentlichungstag der Anmeldung: 21.09.2011
(73) Patentinhaber: Bürkert Werke GmbH, 74653 Ingelfingen (DE)
(72) Erfinder: Equit, Alexander, 10318 Berlin (DE); Kettemann, Ralf, 74632 Neuenstein-Kirchensall (DE)
(74) Vertreter: Prinz & Partner mbB

(56) Entgegenhaltungen:
- EP-B1- 0 972 148
- WO-A1-97/17558
- WO-A1-99/13251
- US-A- 5 706 859
- US-A1- 2005 252 562
- US-B1- 6 237 637

## Beschreibung

Die Erfindung betrifft eine Verwendung eines Ventilknotens zum Spüllen des Ventilknotens und ein Verfahren zum Spülen eines Ventilknotens.

Ventilknoten werden verwendet, um verschiedene Flüssigkeiten zu mischen. Der Ventilknoten hat mehrere Zuflüsse, durch die verschiedene Flüssigkeiten oder Gase zugeführt werden können, sowie einen oder mehrere Abflüsse, durch die die Flüssigkeiten oder Gase aus dem Ventilknoten abgelassen werden können. Die Steuerung der Zuflüsse in die zentrale Mischkammer bzw. der Abflüsse aus der zentralen Mischkammer erfolgt durch Membranventile, die die Zuflüsse bzw. die Abflüsse zur zentralen Mischkammer sperren können. Aus der EP 0 972 148 B1 ist beispielsweise ein Membranventil bekannt, das zwei Zuflüsse und zwei Abflüsse zu einer zentralen Kammer einzeln sperren bzw. öffnen kann, sodass zwei Zuflüsse bzw. Abflüsse mit einem gemeinsamen Ventil gesteuert werden können.

Die WO 99/13251 A1 und die WO 97/17558 A1 offenbaren jeweils einen Ventilknoten ähnlich demjenigen, der aus der EP 0 972 148 B1 bekannt ist.

Um Rückstände einer Flüssigkeit aus dem Ventilknoten zu entfernen, beispielsweise, wenn ein anderes Mischungsverhältnis benötigt wird, oder eine Vermischung mit einer zuvor verwendeten Flüssigkeit vermieden werden soll, ist bisher die Spülung des gesamten Ventilknotens notwendig. Die Anschlüsse müssen entfernt werden, wodurch die in den Zuflüssen enthaltenen Flüssigkeitsreste verloren gehen. Nach dem Reinigen und Anschließen der Anschlüsse müssen zudem die Toträume in den Anschlüssen erneut befüllt werden, wodurch ein hoher Verbrauch der Flüssigkeiten entsteht.

Aufgabe der Erfindung ist es, eine Verwendung und ein Verfahren bereitzustellen, die eine einfachere und effizientere Reinigung des Ventilknotens ermöglichen. Die Erfindung wird definiert durch eine Verwendung nach Anspruch 1 und ein Verfahren nach Anspruch 17.

Es ist dafür ein Ventilknoten vorgesehen, mit einem Gehäuse, wobei das Gehäuse eine zentrale Mischkammer sowie eine Mantelfläche aufweist. Auf der Mantelfläche des Ventilknotens sind zumindest zwei Anschlüsse für jeweils ein Ventil vorgesehen, wobei der erste Ventilanschluss drei Öffnungen aufweist; und die weiteren Ventilanschlüsse zumindest zwei, vorzugsweise drei Öffnungen aufweisen. Jeweils eine erste Öffnung der Ventilanschlüsse ist strömungstechnisch direkt mit der zentralen Mischkammer verbunden, und die zweite und dritte Öffnung der Ventilanschlüsse ist jeweils strömungstechnisch über einen Kanal mit einem Zu- oder Abfluss verbunden. Am Ventilknoten ist zusätzlich zu den Zu- und Abflüssen ein Außenanschluss vorgesehen, der direkt strömungstechnisch über einen Kanal mit der Mischkammer verbunden ist. Über diesen Kanal bzw. über diesen Außenanschluss kann die Mischkammer unabhängig von den Ventilen den Zuflüssen und Abflüssen gespült werden. Die Anschlüsse müssen nicht vom Ventilknoten entfernt werden, so dass eine schnellere Reinigung der zentralen Mischkammer möglich ist. Zudem wird nur die Mischkammer bzw. ein Abfluss, der mit der Mischkammer strömungstechnisch, beispielsweise über ein Ventil, verbunden ist, gespült. Die Mischkammer sowie der Abfluss werden vollständig gereinigt, sodass bei einem weiteren Mischvorgang keine Rückstände in das neue Mischgut gelangen können. Die übrigen Kanäle sowie die Ventile werden nicht gespült, sodass diese mit anderen Mischflüssigkeiten gefüllt bleiben können und nicht unnötig entleert werden müssen. Dadurch kann die Verschwendung von Flüssigkeiten beim Spülen deutlich reduziert werden.

Der mit dem Außenanschluss strömungstechnisch in Verbindung stehende Kanal weist vorzugsweise gegenüber einer senkrecht zu einer Längsachse des Gehäuses angeordneten Ebene ein Gefälle zur Mischkammer hin auf. In eingebautem Zustand ist die Längsachse des Gehäuses senkrecht angeordnet, sodass eine senkrecht zur Längsachse angeordnete Ebene waagrecht angeordnet ist. Der mit dem Außenanschluss strömungstechnisch in Verbindung Kanal ist zu dieser Ebene geneigt, sodass eine am Außenanschluss eingebrachte Flüssigkeit selbständig der Schwerkraft folgend in die Mischkammer fließt.

Um das Zurückbleiben von Flüssigkeitsresten der Spülflüssigkeit im Kanal zu verhindern, weist dieser ein konstantes Gefälle auf, sodass keine Senken vorhanden sind, in denen Flüssigkeitsreste zurückbleiben können.

Idealerweise weist der Kanal ein Gefälle in der Größenordnung von 3° bis 10° auf, um ein sicheres Abfließen des Reinigungsmediums oder der Flüssigkeit zu gewährleisten.

In einer bevorzugten Ausführungsform weist der Boden der Mischkammer gegenüber einer senkrecht zu einer Längsachse des Gehäuses angeordneten Ebene ein Gefälle zur ersten Öffnung des ersten Ventilanschlusses hin auf. Ein in die Mischkammer eingebrachtes Spülmedium fließt somit selbständig aus der Mischkammer aus, sodass nach dem Spülen eine selbständige, rückstandsfreie Entleerung der Mischkammer möglich ist.

Vorzugsweise ist zumindest eine Öffnung des ersten Ventilanschlusses strömungstechnisch mit einem Abfluss verbunden, sodass ein Spülmedium oder eine andere Flüssigkeit direkt aus der Mischkammer in einen Abfluss geführt werden kann.

Die mit dem Abfluss in Verbindung stehende Öffnung des ersten Ventilanschlusses ist idealerweise tiefer angeordnet als der tiefste Punkt der Mischkammer.

Vorzugsweise weisen die mit einem Abfluss strömungstechnisch in Verbindung stehenden Kanäle gegenüber einer senkrecht zu einer Längsachse des Gehäuses angeordneten Ebene ein Gefälle vom jeweiligen Ventilanschluss zum Abfluss hin auf. Im Ventilknoten bzw. in den Ventilen vorhandene Flüssigkeit kann so der Schwerkraft folgend aus dem Abfluss ausfließen. In Verbindung mit einem geneigten Boden der Mischkammer bzw. einem geneigten, mit dem Außenanschluss strömungstechnisch in Verbindung stehenden Kanal ist somit nach dem Spülen der Mischkammer eine vollständige Selbstentleerung des Ventilknotens bzw. der Mischkammer gewährleistet.

Idealerweise weisen auch die mit einem Zufluss strömungstechnisch in Verbindung stehenden Kanäle gegenüber einer senkrecht zur Längsachse des Gehäuses angeordneten Ebene ein Gefälle vom Zifluss zur jeweiligen Öffnung des Ventilanschlusses auf. Somit ist nicht nur nach einem Spülen eine vollständige Selbstentleerung des Knotens gewährleistet, sondern auch beim Spülen durch einen der anderen Anschlüsse.

Um sicherzustellen, dass in den Kanälen keine Rückstände verbleiben, weisen die Kanäle idealerweise ein konstantes oder ein konstant zunehmendes Gefälle auf. Dadurch ist die vollständige Selbstentleerungsfunktion des Ventilknotens gewährleistet.

Die Mantelfläche des Ventilknotens weist zumindest zwei Seitenflächen auf, wobei auf jeder Seitenfläche ein Ventilanschluss vorgesehen ist. Die Seitenflächen weisen unabhängig von der Form der Mantelfläche eine Geometrie auf, an der ein Ventil befestigt werden kann.

Um die Erreichbarkeit der einzelnen Ventile bzw. der Ventilanschlüsse sicherzustellen, sind die Seitenflächen vorzugsweise gleichmäßig auf dem Umfang der Mantelfläche verteilt angeordnet.

Vorzugsweise sind zwei Seitenflächen vorgesehen, die sich in Umfangsrichtung gegenüberliegen.

Die Öffnungen eines Ventilanschlusses können beispielsweise in Richtung der Längsachse hintereinander angeordnet sein, das heißt in eingebautem Zustand sind die Öffnungen des Ventilanschlusses vertikal übereinander angeordnet Somit kann eine Flüssigkeit von einer oberen Öffnung der Schwerkraft folgend in Richtung der darunterliegenden Öffnung fließen.

Es ist aber auch denkbar, dass die Öffnungen eines Ventilanschlusses in Richtung der Längsachse nebeneinander angeordnet sind, das heißt in eingebautem Zustand des Ventilknotens sind die Öffnungen horizontal nebeneinander angeordnet.

Zur Befestigung der Ventile sind vorzugsweise an der Mantelfläche Befestigungsvorrichtungen, insbesondere Bohrungen, vorgesehen, an denen ein Ventil befestigt werden kann.

Weitere Vorteile und Merkmale ergeben sich aus der nachfolgenden Beschreibung in Verbindung mit den beigefügten Zeichnungen. In diesen zeigen:
- Figur 1 eine erste Ausführungsform eines Ventilknotens für eine Baugruppe.
- Figur 2 eine vertikale Schnittansicht durch den Ventilknoten aus Figur 1,
- Figur 3 eine zweite Ausführungsform eines Ventilknotens für eine Ventilbaugruppe.
- Figur 4 eine vertikale Schnittansicht durch den Ventilknoten aus Figur 3,
- Figur 5 eine dritte Ausführungsform eines Ventilknotens,
- Figur 6 eine zweite Ansicht des Ventilknotens aus Figur 5,
- Figur 7 eine Teilschnittansicht des Ventilknotens aus Figur 5,
- Figur 8 eine zweite Teilschnittansicht des Ventilknotens aus Figur 5,
- Figur 9 eine Komplettansicht des Ventilknotens aus Figur 5, und
- Figur 10 eine Ventilbaugruppe mit dem Ventilknoten aus Figur 5.

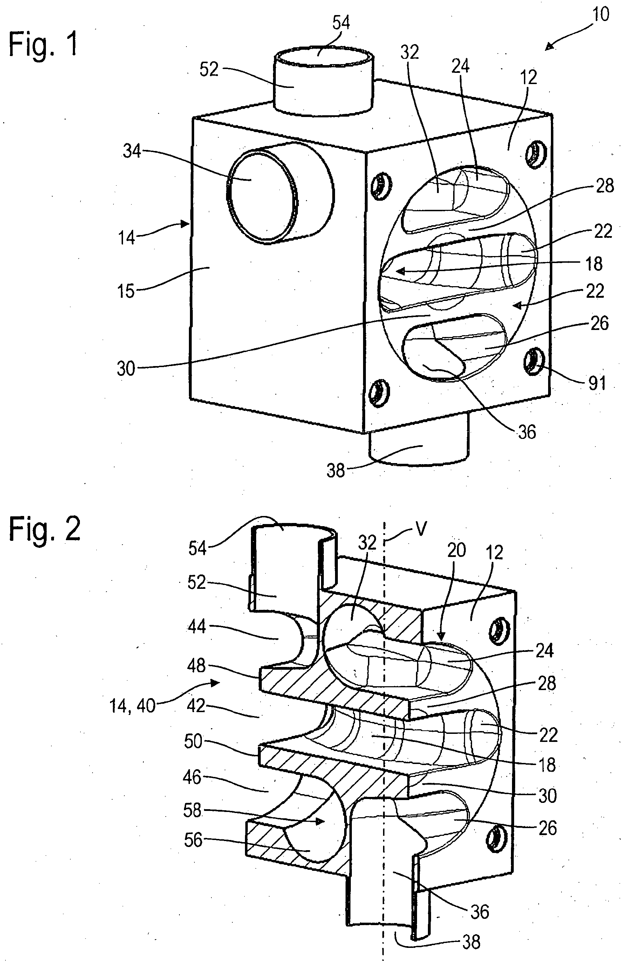

Die in Figur 1 gezeigte erste Ausführungsform eines Ventilknotens 10 hat eine zentrale Mischkammer zum Vermischen verschiedener Flüssigkeiten oder Gase sowie zwei Seitenflächen 12, 14 die hier einander diametral gegenüberliegend auf der Mantelfläche 15 des Ventilknotens 10 angeordnet sind.

An der ersten Seitenfläche 12 ist ein erster Ventilanschluss 20 vorgesehen, der drei Öffnungen 22, 24, 26 aufweist, die jeweils durch Stege 28, 30 voneinander getrennt sind. Die erste Öffnung 22 ist strömungstechnisch direkt mit der zentralen Mischkammer 18 verbunden. Die zweite Öffnung 24 ist über einen Kanal 32 mit einem Zufluss 34 verbunden. Die dritte Öffnung 26 ist über einen Kanal 36 mit einem Abfluss 38 verbunden.

Als Zuflüsse werden hier Anschlüsse bezeichnet, die in eingebautem Zustand des Ventilknotens 10 strömungstechnisch vor der zentralen Mischkammer 18 angeordnet sind, also in eingebautem Zustand des Ventilknotens, bezogen auf eine vertikale Längsachse V, oberhalb des zentralen Mischkammer 18 angeordnet sind. Abflüsse sind dementsprechend Anschlüsse, die strömungstechnisch nach der zentralen Mischkammer 18 angeordnet sind, also in eingebautem Zustand, bezogen auf die vertikale Längsachse V, unterhalb der zentralen Mischkammer 18 liegen. Es ist aber auch denkbar, eine Flüssigkeit über einen Abfluss, also einen unterhalb der zentralen Mischkammer 18 angeordneten Anschluss, in den Ventilknoten 10 einzubringen.

Analog zur ersten Seitenfläche 12 ist an der zweiten Seitenfläche 14 ein zweiter Ventilanschluss 40 vorgesehen, der eine erste Öffnung 42, eine zweite Öffnung 44, sowie eine dritte Öffnung 46 aufweist, die jeweils durch Stege 48, 50 voneinander getrennt sind. Die erste Öffnung 42 ist auch hier strömungstechnisch direkt mit der zentralen Mischkammer 18 verbunden. Die zweite Öffnung 44 ist über einen Kanal 52 mit einem Zufluss 54 verbunden. Die dritte Öffnung 46 ist strömungstechnisch über einen Kanal 56 mit einem Abfluss 58 verbunden.

An jeder Seitenfläche 12, 14 sind Befestigungsvorrichtungen 91, hier Bohrungen vorgesehen, um ein Membranventil am jeweiligen Ventilanschluss 20, 40 zu befestigen. Die Funktion des Membranventils wird im Folgenden anhand des ersten Ventilanschlusses 20 erläutert:
Das Membranventil hat eine Membran, die durch eine Steuerung sowohl gegen den ersten Steg 28 als auch gegen den zweiten Steg 30 gedrückt werden kann. Wird die Membran gegen beide Stege 28, 30 gedrückt, sperrt das Membranventil den kompletten Ventilanschluss 20, so dass alle Öffnungen 22, 24, 26 gesperrt sind. Wird die Membran lediglich gegen den ersten Steg 28 gedrückt, sind die erste Öffnung 22 und die dritte Öffnung 26 strömungstechnisch verbunden. Wird die Membran gegen den zweiten Steg 30 gedrückt, ist die erste Öffnung 22 strömungstechnisch mit der zweiten Öffnung 24 verbunden. Liegt die Membran weder am ersten Steg 28 noch am zweiten Steg 30 an, sind alle drei Öffnungen 22, 24, 26 strömungstechnisch miteinander verbunden.

Mit jedem Ventil bzw. jedem Ventilanschluss 20, 40 können somit jeweils zwei Zu- oder Abflüsse 34, 38, 54, 58 gesteuert werden. Bei dem hier gezeigten Ventilknoten können somit vier Abflüsse bzw. Zuflüsse 34, 38, 54, 58 mit lediglich zwei Ventilen gesteuert werden. Da über jeden der Zuflüsse 34, 54 bzw. Abflüsse 38, 58 ein Medium in die zentrale Mischkammer 18 eingeleitet werden kann, ist es möglich (unter der Annahme, dass zumindest ein Abfluss notwendig ist), über drei Zuflüsse eine Flüssigkeit in die zentrale Mischkammer 18 einzubringen. Somit ist mit lediglich zwei Ventilen ein Mischen von bis zu drei Flüssigkeiten möglich.

Zur Reinigung des Ventilknotens 10 wird über einen Zufluss 34, 54 oder einen Abfluss 38, 58 ein Reinigungsmedium in den Ventilknoten eingebracht. Anschließend werden die Ventile geöffnet, um das Reinigungsmedium abfließen zu lassen. Um Verunreinigungen durch das Reinigungsmedium oder ein anderes Medium in der zentralen Mischkammer 18 bzw. im Ventilknoten 10 zu verhindern, dürfen nach dem Reinigungsprozess keine Rückstände des Reinigungsmediums oder eines anderen Mediums im Ventilknoten verbleiben. Dies wird beispielsweise mit einem Riboflavintest nachgewiesen. Bei einem Riboflavintest wird der gesamte Ventilknoten 10 mit einer stark haftenden, fluoreszierenden Flüssigkeit eingesprüht und nach einem Reinigungszyklus auf Rückstände der fluoreszierenden Flüssigkeit untersucht.

Durch geeignetes Schalten der Ventile ist bei dem Ventilknoten gemäß der ersten Ausführungsform eine Kreuzdurchströmung von Zufluss 34 zu Abfluss 58 und anschließend von Zufluss 54 zu Abfluss 38 möglich. Auf diese Weise kann der Innenraum des Ventilknotens vollständig gereinigt werden, was ein großer Vorteil gegenüber dem Stand der Technik ist.

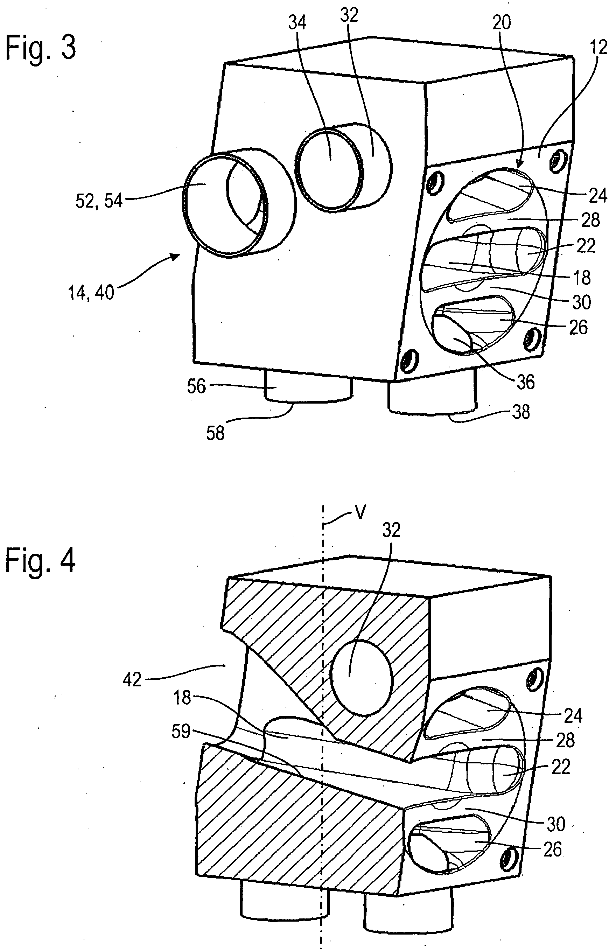

In den Figuren 3 und 4 ist eine zweite Ausführungsform des Ventilknotens 10 gezeigt, der hinsichtlich seines Aufbaus im Wesentlichen dem in den Figuren 1. und 2 gezeigten Ventilknoten entspricht. Abweichend von der ersten Ausführungsform ist der Zufluss 34, der mit der zweiten Öffnungen 24 des ersten Ventilanschlusses verbunden ist, aber an der Mantelfläche 15 des Ventilknotens 10 vorgesehen.

Der Ventilknoten 10 weist hier eine zentrale Mischkammer 18 auf, deren Boden 59 gegenüber einer senkrecht zur vertikalen Längsachse V des Ventilknotens 10 angeordneten Ebene ein Gefälle aufweist. Der Boden 59 der Mischkammer 18 ist zur ersten Öffnung 22 des ersten Ventilanschlusses 20 geneigt, so dass bei geöffneten Ventilen ein Medium aus der zentralen Mischkammer der Schwerkraft folgend zur ersten Öffnung 22 des ersten Ventilanschlusses 20 fließt. Durch das geöffnete Ventil kann das Medium aus der ersten Öffnung 22 in die dritte Öffnung 26 und somit zum Abfluss 38 abfließen. Die zentrale Mischkammer 18 ist somit bei geöffneten Ventilen selbstentleerend, das heißt zur Reinigung bzw. zur vollständigen Entleerung der zentralen Mischkammer 18 sind keine weiteren Arbeitsschritte erforderlich.

Die Kanäle 32, 36, 52, 56 weisen ebenfalls jeweils ein Gefälle zum jeweiligen Ventilanschluss 20, 40 auf. Beim Öffnen der Ventile entleeren sich die Kanäle 32, 52 der Schwerkraft folgend über den jeweiligen Ventilanschluss 20, 40 in die zentrale Mischkammer 18. Die zentrale Mischkammer 18 entleert sich durch das Gefälle des Bodens 59 zur dritten Öffnung 26 des ersten Ventilanschlusses 20 und somit in den Abfluss 38.

Die Kanäle 32, 36, 52, 56 sowie der Boden 59 der zentralen Mischkammer 18 weisen hier ein konstantes oder ein zum jeweiligen Ventilanschluss 20, 40 konstant zunehmendes Gefälle auf, d.h. in den Kanälen 32, 36, 52, 56 und die zentrale Mischkammer 18 weisen keine Senken auf, in denen sich Flüssigkeitsreste sammeln können.

Somit ist der Ventilknoten 10 bei vollständiger Öffnung der Ventile selbstentleerend, das heißt beim Öffnen der Ventile erfolgt eine vollständige Entleerung des Ventilknotens 10. Bei einem Riboflavintest konnten nach einem Reinigungsprozess keine Flüssigkeitsrückstände im Ventilknoten 10 nachgewiesen werden.

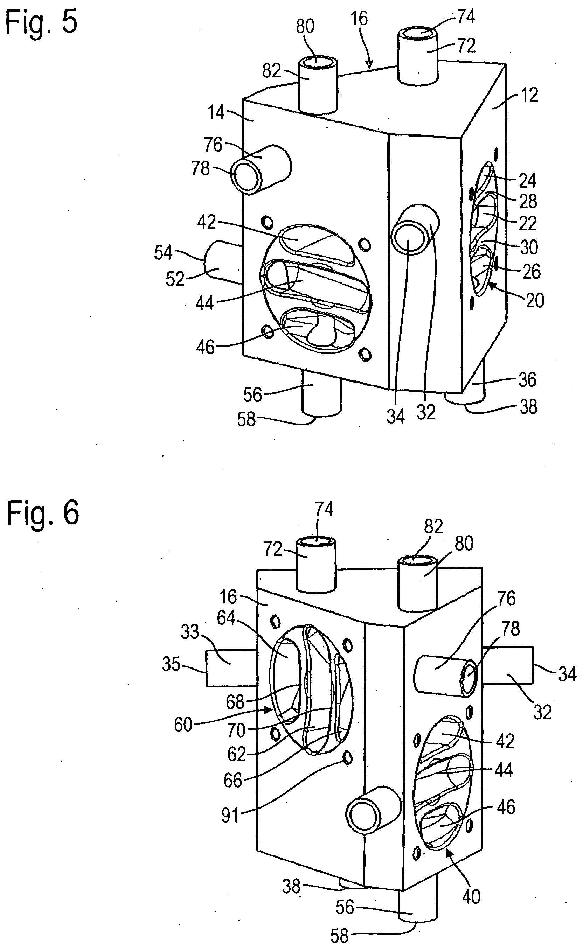

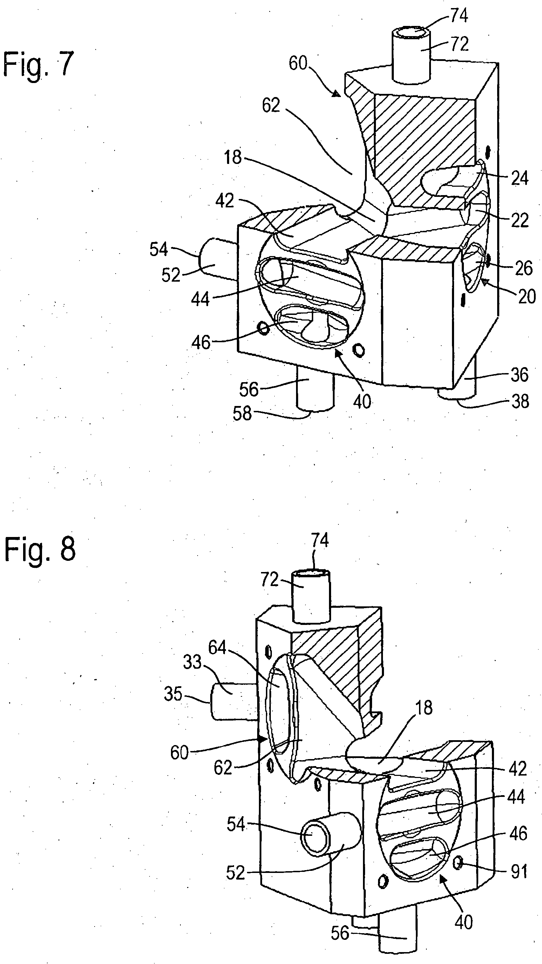

In den Figuren 5 bis 9 ist eine dritte Ausführungsform eines Ventilknotens 10 mit einer zentralen Mischkammer 18 gezeigt. Der hier gezeigte Ventilknoten 10 hat drei Seitenflächen 12, 14, 16, an denen jeweils ein Ventilanschluss 20, 40, 60 angeordnet ist.

Der Aufbau des ersten Ventilanschlusses 20 entspricht im wesentlichen dem des in den Figuren 3 und 4 dargestellten ersten Ventilanschlusses 20. Der Ventilanschluss weist drei Öffnungen 22, 24, 26 auf, die durch Stege 28, 30 voneinander getrennt sind. Die erste Öffnung 22 ist strömungstechnisch mit der zentralen Mischkammer 18 verbunden. Die zweite Öffnung 24 ist über einen Kanal 32 mit einem Zufluss 34 verbunden, und die dritte Öffnung 26 ist über einen Kanal 36 strömungstechnisch mit einem Abfluss 38 verbunden. Wie insbesondere in Figur 6 zu sehen ist, ist die zweite Öffnung 24 über einen zusätzlichen Kanal 33 mit einem weiteren Zufluss 35 verbunden.

Der zweite Ventilanschluss 40 ist hier gegenüber dem ersten Ventilanschluss 20 vertikal versetzt, das heißt er befindet sich unterhalb des ersten Ventilanschlusses 20. Abweichend von dem in Figur 3 und 4 dargestellten Ausführungsbeispiel ist hier die erste Öffnung 42, die mit der zentralen Mischkammer 18 verbunden ist, in vertikaler Richtung über der zweiten und dritten Öffnung 44, 46 angeordnet. Die zweite Öffnung 44 ist auch hier über einen Kanal 52 mit einem Zufluss 54 verbunden, wobei der Zufluss 54 an der Mantelfläche 15 vorgesehen ist. Die dritte Öffnung 46 ist über einen Kanal 56 mit einem Abfluss 58 verbunden.

Wie insbesondere in Figur 6 zu sehen ist, hat der dritte Ventilanschluss 60 ebenfalls drei Öffnungen 62, 64, 66, die hier im Gegensatz zum ersten Ventilanschluss 20 und zweiten Ventilanschluss 40 nebeneinander angeordnet sind, das heißt die Stege zwischen den Öffnungen 62, 64, 66 verlaufen in Richtung der vertikalen Längsachse V. Die erste Öffnung 62 ist auch hier strömungstechnisch mit der zentralen Mischkammer 18 verbunden. Die zweite Öffnung 64 sowie die dritte Öffnung 64 sind jeweils über einen Kanal 72, 76 mit einem Zufluss 74, 78 verbunden.

Der hier gezeigte Ventilknoten 10 hat also insgesamt sechs bzw. sieben Anschlüsse, die mit drei Ventilen gesteuert werden können. Somit können mit drei Ventilen, ein Abfluss für die gemischte Flüssigkeit vorausgesetzt, über fünf bzw. sechs Anschlüsse verschiedene Flüssigkeiten in die zentrale Mischkammer 18 eingeleitet und gemischt werden.

Der Vorteil der dritten Ausführungsform gemäß den Figuren 5 bis 9 gegenüber der zweiten Ausführungsform gemäß den Figuren 3 und 4 liegt darin, dass sie leichter gereinigt werden kann.

Bei dem in den Figuren 3 und 4 dargestellten Ventilknoten 10 ist zur Reinigung der Mischkammer 18 zum einen das Entfernen eines Anschlusses notwendig, um das Reinigungsmedium in den Ventilknoten einbringen zu können. Zum anderen ist eine vollständige Entleerung des Ventilknotens, also auch der Ventile und aller Abflüsse und Zuflüsse notwendig.

Üblicherweise ist es aber nur notwendig, die zentrale Mischkammer 18 zu spülen, um bei einem erneuten Mischvorgang Verunreinigungen durch Rückstände des vorherigen Mischvorgangs zu vermeiden

Der in den Figuren 5 bis 9 gezeigte Ventilknoten 10 hat zusätzlich auf der Oberseite einen Außenanschluss 80. Dieser Außenanschluss 80 ist über einen Kanal 82 direkt strömungstechnisch mit der Mischkammer 18 verbunden. Über diesen Außenanschluss kann ein Reinigungsmedium direkt in die zentrale Mischkammer 18 eingebracht werden. Zum Spülen der Mischkammer 18 ist lediglich das Öffnen eines mit der Mischkammer verbundenen Abflusses, vorzugsweise des in vertikaler Richtung niedrigsten Abflusses, erforderlich.

Zum einen ist so keine vollständige Entleerung der Kanäle des Ventilknotens 10 notwendig, sodass eine erhebliche Flüssigkeitseinsparung erzielt werden kann. Zum anderen kann die Reinigung wesentlich schneller und unkomplizierter erfolgen, da kein anderer Anschluss entfernt werden muss, um die Spülflüssigkeit in die Mischkammer 18 einzubringen. Zum Spülen der Mischkammer 18 ist es lediglich erforderlich, am ersten Ventilanschluss 20 die Verbindung zwischen der ersten Öffnung 22 und der dritten Öffnung 26 zu öffnen, sodass das Reinigungsmedium aus der zentralen Mischkammer 18 in den Abfluss 38 strömen kann.

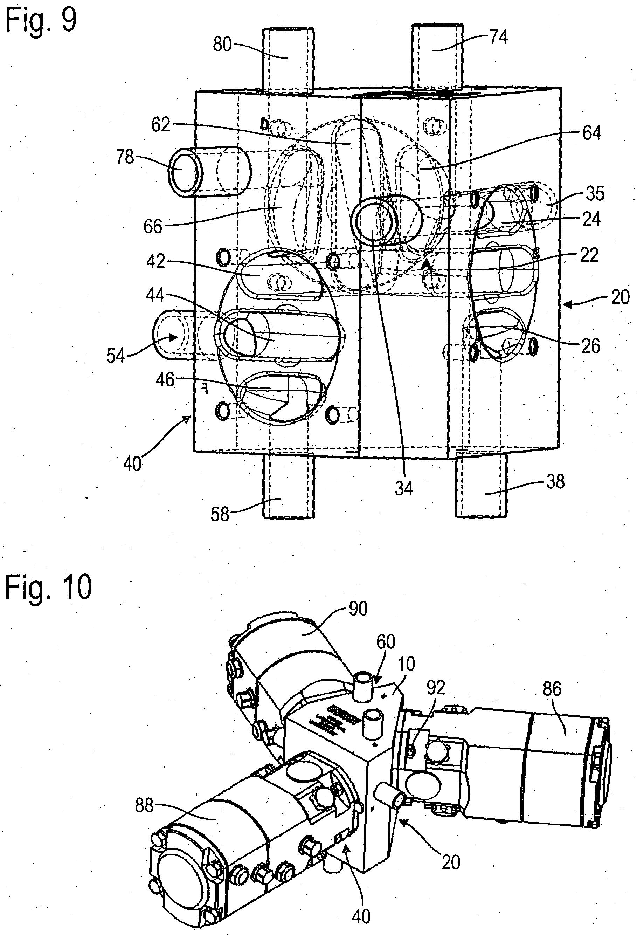

In Figur 10 ist eine Ventilbaugruppe 84 mit einem Ventilknoten 10 gezeigt. An jedem Ventilanschluss 20, 40, 60 ist hier ein Membranventil 86, 88, 90 befestigt. Die Membranventile 86, 88, 90 sind jeweils mit geeigneten Befestigungsmitteln, hier Schrauben 92, an den Befestigungsvorrichtungen 91 an den Seitenflächen 12, 14, 16 befestigt. Die Seitenflächen 12, 14, 16 sind hier gleichmäßig auf dem Umfang der Mantelfläche verteilt angeordnet, sodass um die Ventile 86, 88, 90 bzw. die Seitenflächen 12, 14, 16 ein möglichst großer Raum zur Montage, Wartung und/oder Demontage der Ventile 86, 88, 90 geschaffen ist. Davon abweichend ist aber auch eine beliebige andere Anordnung der Ventilanschlüsse 20, 40 60 denkbar. Der Ventilknoten 10 kann abweichend von den hier dargestellten Ausführungsbeispielen auch mehr als drei Seitenflächen 12, 14, 16 aufweisen.

## Patentansprüche

1. Verwendung eines Ventilknotens (10) zum Spülen des Ventilknotens, wobei der Ventilknoten ein Gehäuse aufweist, das eine zentrale Mischkammer (18) sowie eine Mantelfläche (15) aufweist, und
wobei auf der Mantelfläche (15) des Ventilknotens (10) zumindest zwei Ventilanschlüsse (20, 40, 60) für jeweils ein Ventil (86, 88, 90) vorgesehen sind,
wobei der erste Ventilanschluss (20) drei Öffnungen (22, 24, 26) aufweist, und die weiteren Ventilanschlüsse (40, 60) zumindest zwei, vorzugsweise drei Öffnungen (42, 44, 46, 62, 64, 66) aufweisen,
wobei jeweils eine erste Öffnung (22, 42, 62) der Ventilanschlüsse (20, 40, 60) strömungstechnisch direkt mit der zentralen Mischkammer (18) verbunden ist, und die zweite und dritte Öffnung (24, 26, 44, 46, 64, 66) der Ventilanschlüsse (20, 40, 60) jeweils strömungstechnisch über einen Kanal (32, 36, 52, 56, 72, 76) mit einem Zu- oder Abfluss (34, 38, 54, 58, 74, 78) verbunden ist,
wobei zusätzlich zu den Zu- und Abflüssen (34, 38, 54, 58, 74, 78) und zusätzlich zu den Öffnungen (42, 44, 46, 62, 64, 66) der Ventilanschlüsse (20, 40, 60) ein Außenanschluss (80) vorgesehen ist, der direkt strömungstechnisch über einen Kanal (82) mit der Mischkammer (18) verbunden ist, so dass die Mischkammer (18) gespült werden kann, ohne dass Ventile, die an den Ventilanschlüssen (20, 40, 60) angebracht sind, entfernt werden müssen.

2. Verwendung nach Anspruch 1, **dadurch gekennzeichnet, dass** der mit dem Außenanschluss (80) strömungstechnisch in Verbindung stehenden Kanal (82) gegenüber einer senkrecht zu einer Längsachse (V) des Gehäuses angeordneten Ebene ein Gefälle zur Mischkammer (18) aufweist.

3. Verwendung nach Anspruch 2, **dadurch gekennzeichnet, dass** der Kanal (82) ein konstantes Gefälle aufweist.

4. Verwendung nach Anspruch 2 oder 3, **dadurch gekennzeichnet, dass** das Gefälle in der Größenordnung von 3° bis 10° beträgt.

5. Verwendung nach einem der vorhergehenden Ansprüche, **dadurch gekennzeichnet, dass** der Boden (59) der Mischkammer (18) gegenüber einer senkrecht zu einer Längsachse (V) des Gehäuses angeordneten Ebene ein Gefälle zur ersten Öffnung (22) des ersten Ventilanschlusses (20) hin aufweist.

6. Verwendung nach einem der vorhergehenden Ansprüche, **dadurch gekennzeichnet, dass** zumindest eine Öffnung (26) des ersten Ventilanschlusses (20) strömungstechnisch mit einem Abfluss (38) verbunden ist.

7. Verwendung nach Anspruch 4, **dadurch gekennzeichnet, dass** die mit dem Abfluss (38) verbundene Öffnung (26) des ersten Ventilanschlusses (20) tiefer angeordnet ist als der tiefste Punkt der Mischkammer (18).

8. Verwendung nach einem der vorhergehenden Ansprüche, **dadurch gekennzeichnet, dass** die mit einem Abfluss (38, 58, 78) strömungstechnisch in Verbindung stehenden Kanäle (36, 56, 76) gegenüber einer senkrecht zu einer Längsachse (V) des Gehäuses angeordneten Ebene ein Gefälle vom jeweiligen Ventilanschluss (20, 40, 60) zum Abfluss (38, 58, 78) aufweisen.

9. Verwendung nach einem der vorhergehenden Ansprüche, **dadurch gekennzeichnet, dass** die mit einem Zufluss (34, 54, 74) strömungstechnisch in Verbindung stehenden Kanäle (32, 52, 72) gegenüber einer senkrecht zur Längsachse (V) des Gehäuses angeordneten Ebene ein Gefälle vom Zufluss (34, 54, 74) zur jeweiligen Öffnung (24, 44, 64) des Ventilanschlusses (20, 40, 60) aufweisen.

10. Verwendung nach Anspruch 8 oder 9, **dadurch gekennzeichnet, dass** das Gefälle konstant oder konstant zunehmend ausgebildet ist.

11. Verwendung nach einem der vorhergehenden Ansprüche, **dadurch gekennzeichnet, dass** die Mantelfläche (15) zumindest zwei Seitenflächen (12, 14, 16) aufweist, wobei auf jeder Seitenfläche (12, 14, 16) ein Ventilanschluss (20, 40, 60) vorgesehen ist.

12. Verwendung nach Anspruch 11, **dadurch gekennzeichnet, dass** die Seitenflächen (12, 14, 16) gleichmäßig auf dem Umfang der Mantelfläche (15) verteilt angeordnet sind.

13. Verwendung nach Anspruch11 oder 12, **dadurch gekennzeichnet, dass** zwei Seitenflächen (12, 14, 16) vorgesehen sind, die sich in Umfangsrichtung gegenüberliegen.

14. Verwendung nach einem der vorhergehenden Ansprüche, **dadurch gekennzeichnet, dass** die Öffnungen (22, 24, 26, 42, 44, 46, 62, 64, 66) eines Ventilanschlusses (20, 40, 60) in Richtung der Längsachse (V) hintereinander angeordnet sind.

15. Verwendung nach einem der vorhergehenden Ansprüche, **dadurch gekennzeichnet, dass** die Öffnungen (22, 24, 26, 42, 44, 46, 62, 64, 66) eines Ventilanschlusses (20, 40, 60) in Richtung der Längsachse (V) nebeneinander angeordnet sind.

16. Verwendung nach einem der vorhergehenden Ansprüche, **dadurch gekennzeichnet, dass** an der Mantelfläche (15) Befestigungsvorrichtungen (91), insbesondere Bohrungen, zur Befestigung eines Ventils (86, 88, 90) vorgesehen sind.

17. Verfahren zum Spülen eines Ventilknotens (10),
wobei der Ventilknoten ein Gehäuse aufweist, das eine zentrale Mischkammer (18) sowie eine Mantelfläche (15) aufweist, und
wobei auf der Mantelfläche (15) des Ventilknotens (10) zumindest zwei Ventilanschlüsse (20, 40, 60) für jeweils ein Ventil (86, 88, 90) vorgesehen sind,
wobei der erste Ventilanschluss (20) drei Öffnungen (22, 24, 26) aufweist,
und die weiteren Ventilanschlüsse (40, 60) zumindest zwei, vorzugsweise drei Öffnungen (42, 44, 46, 62, 64, 66) aufweisen,
wobei jeweils eine erste Öffnung (22, 42, 62) der Ventilanschlüsse (20, 40, 60) strömungstechnisch direkt mit der zentralen Mischkammer (18) verbunden ist, und die zweite und dritte Öffnung (24, 26, 44, 46, 64, 66) der Ventilanschlüsse (20, 40, 60) jeweils strömungstechnisch über einen Kanal (32, 36, 52, 56, 72, 76) mit einem Zu- oder Abfluss (34, 38, 54, 58, 74, 78) verbunden ist,
wobei zusätzlich zu den Zu- und Abflüssen (34, 38, 54, 58, 74, 78) und zusätzlich zu den Öffnungen (42, 44, 46, 62, 64, 66) der Ventilanschlüsse (20, 40, 60) ein Außenanschluss (80) vorgesehen ist, der direkt strömungstechnisch über einen Kanal (82) mit der Mischkammer (18) verbunden ist,
**dadurch gekennzeichnet, dass** die Mischkammer (18) über den Außenanschluss (80) gespült wird, ohne dass Ventile, die an den Ventilanschlüssen (20, 40, 60) angebracht sind, entfernt werden müssen

## Claims

1. Use of a valve manifold (10) for rinsing the valve manifold,
the valve manifold including a housing which includes a central mixing chamber (18) and a shell surface (15), and
the shell surface (15) of the valve manifold (10) having at least two valve ports (20, 40, 60) provided thereon for one valve (86, 88, 90) each,
the first valve port (20) having three openings (22, 24, 26),
and the further valve ports (40, 60) each having at least two, preferably three openings (42, 44, 46, 62, 64, 66),
a respective first opening (22, 42, 62) of the valve ports (20, 40, 60) being in direct fluid communication with the central mixing chamber (18) and the second and third openings (24, 26, 44, 46, 64, 66) of the valve ports (20, 40, 60) each being in fluid communication with an inflow or outflow (34, 38, 54, 58, 74, 78) via a duct (32, 36, 52, 56, 72, 76),
an external port (80) being provided in addition to the inflows and outflows (34, 38, 54, 58, 74, 78) and in addition to the openings (42, 44, 46, 62, 64, 66) of the valve ports (20, 40, 60), the external port being in direct fluid communication with the mixing chamber (18) via a duct (82), so that the mixing chamber (18) can be rinsed without any valves mounted to the valve ports (20, 40, 60) having to be removed.

2. The use according to claim 1, **characterized in that** the duct (82) which is in fluid communication with the external port (80) has a slope toward the mixing chamber (18) in relation to a plane arranged perpendicularly to a longitudinal axis (V) of the housing.

3. The use according to claim 2, **characterized in that** the duct (82) has a constant slope.

4. The use according to claim 2 or 3, **characterized in that** the slope is on the order of 3° to 10°.

5. The use according to any of the preceding claims, **characterized in that** in relation to a plane arranged perpendicularly to a longitudinal axis (V) of the housing, the bottom (59) of the mixing chamber (18) has a slope towards the first opening (22) of the first valve port (20).

6. The use according to any of the preceding claims, **characterized in that** at least one opening (26) of the first valve port (20) is in fluid communication with an outflow (38).

7. The use according to claim 4, **characterized in that** the opening (26) of the first valve port (20) in communication with the outflow (38) is arranged lower than the lowest point of the mixing chamber (18).

8. The use according to any of the preceding claims, **characterized in that** in relation to a plane arranged perpendicularly to a longitudinal axis (V) of the housing, the ducts (36, 56, 76) which are in fluid communication with an outflow (38, 58, 78) have a slope from the respective valve port (20, 40, 60) to the outflow (38, 58, 78).

9. The use according to any of the preceding claims, **characterized in that** in relation to a plane arranged perpendicularly to the longitudinal axis (V) of the housing, the ducts (32, 52, 72) which are in fluid communication with an inflow (34, 54, 74) have a slope from the inflow (34, 54, 74) to the respective opening (24, 44, 64) of the valve port (20, 40, 60).

10. The use according to claim 8 or 9, **characterized in that** the slope is made to be constant or constantly increasing.

11. The use according to any of the preceding claims, **characterized in that** the shell surface (15) has at least two side faces (12, 14, 16), a valve port (20, 40, 60) being provided on each side face (12, 14, 16).

12. The use according to claim 11, **characterized in that** the side faces (12, 14, 16) are arranged evenly distributed on the periphery of the shell surface (15).

13. The use according to claim 11 or 12, **characterized in that** two side faces (12, 14, 16) are provided which are disposed opposite each other in the peripheral direction.

14. The use according to any of the preceding claims, **characterized in that** the openings (22, 24, 26, 42, 44, 46, 62, 64, 66) of a valve port (20, 40, 60) are arranged one behind the other in the direction of the longitudinal axis (V).

15. The use according to any of the preceding claims, **characterized in that** the openings (22, 24, 26, 42, 44, 46, 62, 64, 66) of a valve port (20, 40, 60) are arranged side by side in the direction of the longitudinal axis (V).

16. The use according to any of the preceding claims, **characterized in that** attachment devices (91), in particular boreholes, for attachment of a valve (86, 88, 90) are provided on the shell surface (15).

17. A method of rinsing a valve manifold (10),
the valve manifold including a housing which includes a central mixing chamber (18) and a shell surface (15), and
the shell surface (15) of the valve manifold (10) having at least two valve ports (20, 40, 60) provided thereon for one valve (86, 88, 90) each,
the first valve port (20) having three openings (22, 24, 26),
and the further valve ports (40, 60) each having at least two, preferably three openings (42, 44, 46, 62, 64, 66),
a respective first opening (22, 42, 62) of the valve ports (20, 40, 60) being in direct fluid communication with the central mixing chamber (18) and the second and third openings (24, 26, 44, 46, 64, 66) of the valve ports (20, 40, 60) each being in fluid communication with an inflow or outflow (34, 38, 54, 58, 74, 78) via a duct (32, 36, 52, 56, 72, 76),
an external port (80) being provided in addition to the inflows and outflows (34, 38, 54, 58, 74, 78) and in addition to the openings (42, 44, 46, 62, 64, 66) of the valve ports (20, 40, 60), the external port being in direct fluid communication with the mixing chamber (18) via a duct (82),
**characterized in that** the mixing chamber (18) is rinsed via the external port (80), without any valves mounted to the valve ports (20, 40, 60) having to be removed.

## Revendications

1. Utilisation d'un noeud de soupape (10) pour le rinçage du noeud de soupape,
le noeud de soupape présentant un boîtier qui comporte une chambre de mélange centrale (18) et une surface enveloppante (15), et
au moins deux raccordements de soupape (20, 40, 60) pour une soupape respective (86, 88, 90) étant prévus sur la surface enveloppante (15) du noeud de soupape (10),
le premier raccordement de soupape (20) présentant trois ouvertures (22, 24, 26),
et les autres raccordements de soupape (40, 60) présentant au moins deux, de préférence trois ouvertures (42, 44, 46, 62, 64, 66),
une première ouverture (22, 42, 62) respective des raccordements de soupape (20, 40, 60) étant, du point de vue écoulement, directement reliée à la chambre de mélange centrale (18), et la deuxième et troisième ouverture (24, 26, 44, 46, 64, 66) des raccordements de soupape (20, 40, 60) étant, du point de vue écoulement, chacune reliées à une amenée ou à une évacuation (34, 38, 54, 58, 74, 78) par un canal (32, 36, 52, 56, 72, 76),
un raccordement extérieur (80) qui, du point de vue écoulement, est directement relié à la chambre de mélange (18) par un canal (82) étant prévu en plus des amenées et des évacuations (34, 38, 54, 58, 74, 78) et en plus des ouvertures (42, 44, 46, 62, 64, 66) des raccordements de soupape (20, 40, 60), de sorte que la chambre de mélange (18) peut être rincée sans devoir retirer des soupapes qui sont montés sur les raccordements de soupape (20, 40, 60).

2. Utilisation selon la revendication 1, **caractérisée en ce que** le canal (82) qui, du point de vue écoulement, est en communication avec le raccordement extérieur (80) présente, par rapport à un plan agencé perpendiculairement à un axe longitudinal (V) du boîtier, une pente vers la chambre de mélange (18).

3. Utilisation selon la revendication 2, **caractérisée en ce que** le canal (82) présente une pente constante.

4. Utilisation selon la revendication 2 ou 3, **caractérisée en ce que** la pente est d'un ordre de grandeur de 3° à 10°.

5. Utilisation selon l'une des revendications précédentes, **caractérisée en ce que** le fond (59) de la chambre de mélange (18) présente, par rapport à un plan agencé perpendiculairement à un axe longitudinal (V) du boîtier, une pente vers la première ouverture (22) du premier raccordement de soupape (20).

6. Utilisation selon l'une des revendications précédentes, **caractérisée en ce qu'**au moins une ouverture (26) du premier raccordement de soupape (20) est reliée à une évacuation (38) du point de vue écoulement.

7. Utilisation selon la revendication 4, **caractérisée en ce que** l'ouverture (26) du premier raccordement de soupape (20) qui est reliée à l'évacuation (38) est agencée plus bas que le point le plus bas de la chambre de mélange (18).

8. Utilisation selon l'une des revendications précédentes, **caractérisée en ce que** les canaux (36, 56, 76) qui sont en communication avec une évacuation (38, 58, 78) du point de vue écoulement présentent, par rapport à un plan agencé perpendiculairement à un axe longitudinal (V) du boîtier, une pente du raccordement de soupape (20, 40, 60) respectif vers l'évacuation (38, 58, 78).

9. Utilisation selon l'une des revendications précédentes, **caractérisée en ce que** les canaux (32, 52, 72) qui sont en communication avec une amenée (34, 54, 74) du point de vue écoulement présentent, par rapport à un plan agencé perpendiculairement à l'axe longitudinal (V) du boîtier, une pente de l'amenée (34, 54, 74) vers l'ouverture respective (24, 44, 64) du raccordement de soupape (20, 40, 60).

10. Utilisation selon la revendication 8 ou 9, **caractérisée en ce que** la pente est réalisée constante ou de manière à augmenter de manière constante.

11. Utilisation selon l'une des revendications précédentes, **caractérisée en ce que** la surface enveloppante (15) présente au moins deux faces latérales (12, 14, 16), au moins un raccordement de soupape (20, 40, 60) étant prévu sur chacune des faces latérales (12, 14, 16).

12. Utilisation selon la revendication 11, **caractérisée en ce que** les faces latérales (12, 14, 16) sont agencées de manière à être régulièrement réparties sur la périphérie de la surface enveloppante (15).

13. Utilisation selon la revendication 11 ou 12, **caractérisée en ce qu'**il est prévu deux faces latérales (12, 14, 16) qui sont opposées l'une à l'autre dans le sens périphérique.

14. Utilisation selon l'une des revendications précédentes, **caractérisée en ce que** les ouvertures (22, 24, 26, 42, 44, 46, 62, 64, 66) d'un raccordement de soupape (20, 40, 60) sont agencées les unes derrières les autres dans le sens de l'axe longitudinal (V).

15. Utilisation selon l'une des revendications précédentes, **caractérisée en ce que** les ouvertures (22, 24, 26, 42, 44, 46, 62, 64, 66) d'un raccordement de soupape (20, 40, 60) sont agencées les unes à côté des autres dans le sens de l'axe longitudinal (V).

16. Utilisation selon l'une des revendications précédentes, **caractérisée en ce que** des dispositifs de fixation (91), en particulier des perçages sont prévus sur la surface enveloppante (15) pour la fixation d'une soupape (86, 88, 90).

17. Procédé de rinçage d'un noeud de soupape (10),
le noeud de soupape présentant un boîtier qui comporte une chambre de mélange centrale (18) et une surface enveloppante (15), et
au moins deux raccordements de soupape (20, 40, 60) pour une soupape respective (86, 88, 90) étant prévus sur la surface enveloppante (15) du noeud de soupape (10),
le premier raccordement de soupape (20) présentant trois ouvertures (22, 24, 26),
et les autres raccordements de soupape (40, 60) présentant au moins deux, de préférence trois ouvertures (42, 44, 46, 62, 64, 66),
une première ouverture (22, 42, 62) respective des raccordements de soupape (20, 40, 60) étant, du point de vue écoulement, directement reliée à la chambre de mélange centrale (18), et la deuxième et troisième ouverture (24, 26, 44, 46, 64, 66) des raccordements de soupape (20, 40, 60) étant, du point de vue écoulement, chacune reliées à une amenée ou à une évacuation (34, 38, 54, 58, 74, 78) par un canal (32, 36, 52, 56, 72, 76),
un raccordement extérieur (80) qui, du point de vue écoulement, est directement relié à la chambre de mélange (18) par un canal (82) étant prévu en plus des amenées et des évacuations (34, 38, 54, 58, 74, 78) et en plus des ouvertures (42, 44, 46, 62, 64, 66) des raccordements de soupape (20, 40, 60),
**caractérisé en ce que** la chambre de mélange (18) est rincée par l'intermédiaire du raccordement extérieur (80) sans devoir retirer des soupapes qui sont montées sur les raccordements de soupape (20, 40, 60).
